# EUROPÄISCHE PATENTSCHRIFT

(11) **EP 0 860 261 B1**
(45) Veröffentlichungstag und Bekanntmachung des Hinweises auf die Patenterteilung: **25.10.2000**
(21) Anmeldenummer: 98102610.7
(22) Anmeldetag: 16.02.1998
(51) Int. Cl.: B29C 37/00, B29C 43/14, E01C 5/18, E01C 9/04, B29C 43/18, B29C 43/36

(54) **Verfahren zur Herstellung einer elastischen Matte**
Method to produce an elastic mat
Procédé pour produire un tapis élastique

(30) Priorität: 22.02.1997 DE 19707102
(43) Veröffentlichungstag der Anmeldung: 26.08.1998
(73) Patentinhaber: ContiTech Transportbandsysteme GmbH, 30165 Hannover (DE)
(72) Erfinder: Wilke, Helmut, 50737 Köln (DE)

(56) Entgegenhaltungen:
- JP-A- 2 127 015
- JP-A- 3 295 616
- JP-A- 59 188 416
- US-A- 5 470 173

## Beschreibung

Die Erfindung betrifft ein Verfahren zur Herstellung eines flächigen Gummiformteils, insbesondere einer als Unterlage für eine Schotterbettung dienenden Matte aus elastischem Werkstoff, das an seiner Unterseite mit Vorsprüngen versehen ist, durch Vulkanisation in einer beheizbaren Plattenformpresse, die eine Vielzahl von Formnestern aufweist.

Gummimatten mit Vorsprüngen an ihrer Unterseite werden im Gleisbau eingesetzt und dienen dazu, die Schotterbettung und die darauf verlegten Gleise gegen den Untergrund und gegen Tunnel- oder Trogwände elastisch zu lagern, um eine Dämmung des Körperschalls zu bewirken.

Aus der DE 34 25 647 A1 ist eine derartige Matte bekannt, die an ihrer Oberseite ein hochfestes Gewebe aufweist, das zweilagig ausgebildet ist. Die Vorsprünge an der Unterseite der Matte können als im Querschnitt trapezförmige Stufen oder als Kegelstümpfe oder als zylindrische Noppen ausgebildet sein.

Die Herstellung derartiger Matten aus elastischem Grundwerkstoff wird schrittweise in einer beheizbaren Plattenformpresse durchgeführt. Zur Erzielung der an der Unterseite ausgebildeten Vorsprünge wird in der Plattenformpresse das Anordnen von einer Vielzahl von Formnestern auf engstem Raum notwendig, die die Negativform der Vorsprünge aufweisen. In jedem Heizschritt werden auf z.B. 15 m² Pressenfläche ca. 33.000 Formnester angeordnet.

Bei dem Ausformen der Vorsprünge in den Formnestern ist es notwendig, jedes Formnest mit Entlüftungskanälen zu versehen, damit aufgrund des Einpressens des rohen Gummis in die Formnester eingeschlossene Luft und anderes Gas abgeführt werden kann. Wenn die Entlüftung der Formnester nicht wirkungsvoll ist, werden die Vorsprünge schlecht ausgeformt, weil der plastische Gummi die Formnester nicht vollständig ausfüllen kann.

Diese Entlüftungskanäle verursachen den sogenannten Austrieb, der während der Fließphase in die Lüftungskanäle gepresster Gummi ist. Diese Austriebe müssen in einem späteren Arbeitsgang aufwendig entfernt werden.

Aus der DE 40 40 591 A1 ist ein Verfahren zum Herstellen von aufblasbaren flachen Gummihohlkörpern bekannt, bei dem eine Pressform Verwendung findet, deren Forminnenwand einer oder beider Formhälften mit einem sich über den Formraum hinaus erstreckenden Gewebe versehen ist. Damit soll die Luft- und Gasabfuhr während des Vulkanisationsvorganges verbessert werden. Diese Auskleidung einer relativ großen Form für einen einheitlichen Formkörper ist für eine Vielzahl von Formnestern auf engstem Raum nicht realisierbar. Zudem bekommt das entstandene Produkt von dem die Formkontur auskleidenden Gewebe zwangsläufig einen nicht immer erwünschten Gewebeabdruck. Weiter sind nach außen führende Lüftungskanäle zur Ableitung der Luft notwendig.

Der Erfindung liegt die Aufgabe zugrunde, ein Verfahren der eingangs geschilderten Art derart auszugestalten, daß flächige Gummiformteile hergestellt werden können, die eine exakte Ausformung der auf der Unterseite angebrachten Vorsprünge aufweisen, wobei eine aufwendige Nacharbeit des ausgeformten und ausgeheizten Gummiformteils vermieden wird.

Die Aufgabe wird gemäß einer ersten Lösung (Anspruch 1) dadurch gelöst, daß auf die die Formnester aufweisende Formhälfte der Plattenformpresse ein Gewebe mit durchbrochener Bindung gelegt wird, das die gesamten Formnester eines Heizschrittes überdeckt, daß auf das Gewebe eine Platte aus Rohgummi gelegt wird, und daß beim Zufahren der Presse das Gewebe von dem Rohgummi durchdrungen wird, wobei Luft und anderes Gas aus den Formnestern durch die Gewebefäden zum Formrand abgeleitet werden, und daß das Gewebe in das Gummiformteil eingebettet wird.
Das Gewebe mit durchbrochener Bindung wird in der Fachsprache auch als Ajour-Gewebe bezeichnet und ist offenmaschig.

Das fertige Gummiformteil weist keinerlei Austriebe auf. Das ein Entlüftungssystem darstellende Gewebe ist während des Formprozesses vom Gummi durchdrungen und in das Gummiformteil eingebettet. Es wirkt sich vorteilhafterweise verstärkend für das erhaltene Produkt aus.

Wird als entlüftendes Gewebe Baumwollgewebe mit durchbrochener Bindung verwendet, wird ein wirkungsvoller Entlüftungseffekt erzielt. Baumwollfasern haben als natürliche Fasern bzw. Fibrillen eine rauhe Oberfläche. Sie bestehen aus bis zu 5cm langen Naturfasern, die eine hohe Kapillarität haben. Baumwollfasern haben ein Wasseraufnahmevolumen von 25%. Im Gegensatz dazu haben z.B. Polyesterfäden lediglich eine Wasseraufnahmefähigkeit von 5%.

Eine zweite Lösung der gestellten Aufgabe besteht nach dem Anspruch 3 darin, daß auf die die Formnester aufweisende Formhälfte der Plattenformpresse ein Papiervlies gelegt wird, das die gesamten Formnester eine Heizschrittes überdeckt, daß auf das Papiervlies eine Platte aus Rohgummi gelegt wird und daß beim Zufahren der Plattenformpresse das Papiervlies von dem plastifizierten Rohgummi gegen die Wände der Formnester gedrückt wird, wobei Luft und anderes Gas aus den Formnestern durch das Papiervlies zum Formrand abgeleitet werden, und daß das Papiervlies sich mit der Unterfläche des Gummiformteils verbindet.

Das Papiervlies wird durch den Einpressdruck des Gummis an die jeweilige Innenwand der Formnester gedrückt und verbindet sich während des Ausheizens mit der Außenfläche des Gummiformteils.

Durch die Erfindung wird das bisher ein Bestandteil der Plattenformpresse darstellende Entlüftungssystem nun ein Bestandteil des hergestellten Gummiformteils.

Anhand der schematischen Zeichnung wird nachstehend ein Ausführungsbeispiel der Erfindung näher erläutert. Es zeigt:
- Fig. 1: im Querschnitt eine beheizbare Plattenformpresse, in die die Ausgangsbauteile für eine durch Formpressung herzustellende Gummimatte eingelegt sind,
- Fig. 2: den Beginn des Einpressens des plastifizierten Gummis in ein Formnest,
- Fig. 3: im Querschnitt eine ausgeformte und ausvulkanisierte Gummimatte mit auf der Unterseite angeformten Vorsprüngen.

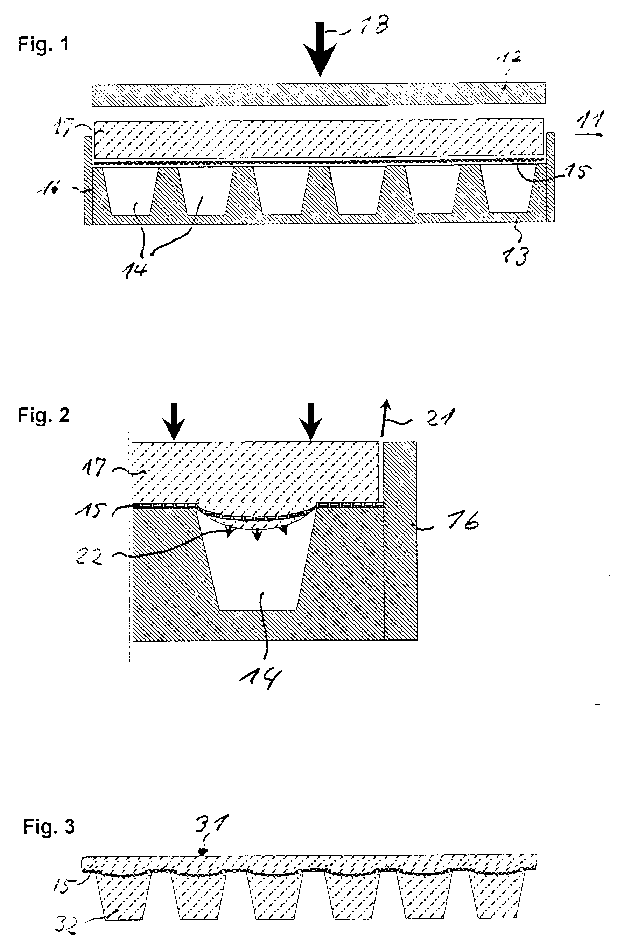

Die in Fig. 1 schematisch angedeutete Plattenformpresse 11 besteht aus einem Plattenoberteil 12 und einem Plattenunterteil 13, das mit einer Vielzahl von Formnestern 14 versehen ist. Auf die Formnester 14 ist ein Baumwollgewebe mit durchbrochener Bindung 15 gelegt, das bis zu den Rändern 16 der Plattenformpresse 11 reicht. Auf die Formnester 14 ist eine Rohgummiplatte 17 gelegt.

Bei einem Schließen (Pfeil 18) der beheizbaren Plattenformpresse 11 dichtet die Rohgummiplatte 17 die Formnester 14 ab (Fig. 2). Die Luft kann aber über das durchbrochen gewebte Baumwollgewebe 15 zum Rand 16 entweichen (Pfeil 21). Der Rohgummi 17 durchdringt beim Zufahren der Plattenformpresse 11 das Baumwollgewebe 15 (Pfeile 22). Der plastifizierte Gummi wird dabei homogenisiert und entlüftet. Durch Druck auf das Formoberteil 12 und Beheizung der Plattenformpresse 11 wird Rohgummi 17 in die Formnester 14 gepreßt und über eine bestimmte Zeit vulkanisiert.

Das Gewebe 15 selbst wird bei diesem Formvorgang in das Rohgummimaterial und damit in das vulkanisierte Produkt 31 integriert (Fig. 3). Die ausgeformten Vorsprünge 32 werden durch das Baumwollgewebe 15 in ihrer Festigkeit verstärkt.

## Patentansprüche

1. Verfahren zur Herstellung eines flächigen Gummiformteils, insbesondere einer als Unterlage für eine Schotterbettung dienenden Matte aus elastischem Werkstoff, das an seiner Unterseite mit Vorsprüngen versehen ist, durch Vulkanisation in einer beheizbaren Plattenformpresse, die eine Vielzahl von Formnestern aufweist,
**dadurch gekennzeichnet,**
daß auf die die Formnester (14) aufweisende Formhälfte (13) der Plattenformpresse (11) ein Gewebe mit durchbrochener Bindung (15) gelegt wird, das die gesamten Formnester (14) eines Heizschrittes überdeckt,
daß auf das Gewebe (15) eine Platte aus Rohgummi (17) gelegt wird,
und daß beim Zufahren der Plattenformpresse (11) das Gewebe (15) von dem plastifizierten Rohgummi durchdrungen wird, wobei Luft und anderes Gas aus den Formnestern (14) durch die Gewebefäden zum Formrand (16) abgeleitet werden und daß das Gewebe (15) in das Gummiformteil (31) eingebettet wird.

2. Verfahren nach Anspruch 1, dadurch gekennzeichnet, daß als Gewebe (15) ein durchbrochen gewebtes Baumwollgewebe verwendet wird.

3. Verfahren zur Herstellung eines flächigen Gummiformteils, insbesondere einer als Unterlage für eine Schotterbettung dienenden Matte aus elastischem Werkstoff, das an seiner Unterseite mit Vorsprüngen versehen ist durch Vulkanisation in einer beheizbaren Plattenformpresse, die eine Vielzahl von Formnestern aufweist,
dadurch gekennzeichnet,
daß auf die die Formnester aufweisende Formhälfte der Plattenformpresse ein Papiervlies gelegt wird, das die gesamten Formnester eines Heizschrittes überdeckt,
daß auf das Papiervlies eine Platte aus Rohgummi gelegt wird,
und daß beim Zufahren der Plattenformpresse das Papiervlies von dem plastifizierten Rohgummi gegen die Wände der Formnester gedrückt wird, wobei Luft und anderes Gas aus den Formnestern durch das Papiervlies zum Formrand abgeleitet werden,
und daß das Papiervlies sich mit der Außenfläche des Gummiformteils verbindet.

## Claims

1. Method of producing a flat rubber moulded component, more especially a mat of resilient material which serves as a base for a ballast bed, said part being provided with projections on its underside, by means of vulcanisation in a heatable sheet moulding press, which has a plurality of mould cavities, characterised in that a fabric with an open-worked structure (15) is placed upon the mould half (13) of the sheet moulding press (11) having the mould cavities (14), said fabric covering all of the mould cavities (14) of one heating step, in that a sheet of crude rubber (17) is placed upon the fabric (15), and in that, during closure of the sheet moulding press (11), the fabric (15) is penetrated by the plasticised crude rubber, air and other gas being conducted from the mould cavities (14) through the fabric filaments to the mould edge (16), and in that the fabric (15) is embedded in the rubber moulded component (31).

2. Method according to claim 1, characterised in that an open-woven cotton fabric is used as the fabric (15).

3. Method of producing a flat rubber moulded component, more especially a mat of resilient material which serves as a base for a ballast bed, said part being provided with projections on its underside, by means of vulcanisation in a heatable sheet moulding press, which has a plurality of mould cavities, characterised in that a paper web is placed upon the mould half of the sheet moulding press having the mould cavities, said paper web covering all of the mould cavities of one heating step, in that a sheet of crude rubber is placed upon the paper web, and in that, during closure of the sheet moulding press, the paper web is pressed by the plasticised crude rubber against the walls of the mould cavities, air and other gas being conducted from the mould cavities through the paper web to the mould edge, and in that the paper web is joined to the external surface of the rubber moulded component.

## Revendications

1. Procédé pour produire une pièce moulée en caoutchouc, plate, en particulier un tapis en matériau élastique, servant de substrat à lit de pierraille ou de ballast, pourvu de saillies sur sa face inférieure, par vulcanisation dans une presse de formage de panneaux susceptible d'être chauffée, présentant une pluralité de poches de formage,
caractérisé en ce que
sur la demi-forme (13), présentant les poches de formage (14), de la presse de formage de panneau (11) est posé un tissu à liage (15) ajouré, recouvrant l'ensemble des poches de formage (14) d'une matrice chauffante,
en ce qu'une plaque en caoutchouc brut (17) est posée sur le tissu (15),
et en ce que, lors de l'amenée à la presse de formage de panneau (11), le tissu (15) est traversé par le caoutchouc brut plastifié, l'air et d'autres gaz issus des poches de formage (14) étant évacués, en traversant la zone des fils du tissu, vers le bord (16) de la poche, et en ce que le tissu (15) est noyé dans la pièce de forme en caoutchouc (31).

2. Procédé selon la revendication 1, caractérisé en ce qu'on utilise comme tissu (15) un tissu en coton, à tissage ajouré.

3. Procédé de fabrication d'une pièce moulée en caoutchouc plate, en particulier d'un tapis en matériau élastique servant de substrat à lit de pierraille ou de ballast, pourvu de saillies sur sa face inférieure, par vulcanisation dans une presse de formage de panneaux susceptible d'être chauffée, présentant une pluralité de poches de formage,
caractérisé en ce que
sur la demi-forme, présentant les poches de formage, de la presse de formage de panneaux est posé un matelas en papier, recouvrant l'ensemble des poches de formage d'une matrice chauffage,
en ce qu'une plaque en caoutchouc brut est posée sur le matelas en papier,
et en ce que, lors de l'amenée à la presse de formage de panneaux, le matelas en papier est pressé, par le caoutchouc brut plastifié, contre les parois des poches de formage, l'air et d'autres gaz issus des poches de formage étant déviés par le matelas en papier, vers le bord de la poche,
et en ce que le matelas en papier se lie à la surface extérieure de la pièce moulée en caoutchouc.
